# EUROPÄISCHE PATENTSCHRIFT

(11) **EP 2 276 962 B1**
(45) Veröffentlichungstag und Bekanntmachung des Hinweises auf die Patenterteilung: **18.04.2012**
(21) Anmeldenummer: 09749479.3
(22) Anmeldetag: 22.04.2009
(51) Int. Cl.: F16L 59/21, F16L 5/00

(54) **KERAMIKKOMPENSATOR FÜR RADIALE UND AXIALE BEWEGLICHKEIT MIT WASSERSCHUTZ**
CERAMIC COMPENSATION ELEMENT FOR RADIAL AND AXIAL MOTION COMPRISING WATER-RESISTANT PROTECTION
COMPENSATEUR CERAMIQUE DE LA MOBILITE RADIALE ET AXIALE PRESENTANT UNE PROTECTION CONTRE L'EAU

(30) Priorität: 17.05.2008 DE 102008024107
(43) Veröffentlichungstag der Anmeldung: 26.01.2011
(73) Patentinhaber: DEKOMTE de Temple Kompensatortechnik GmbH, 63500 Seligenstadt (DE)
(72) Erfinder: DE TEMPLE, Günther, 63533 Mainhausen (DE)
(74) Vertreter: Pöhner, Wilfried Anton
(86) Internationale Anmeldenummer: PCT/DE2009/000562
(87) Internationale Veröffentlichungsnummer: WO 2009/140937

(56) Entgegenhaltungen:
- EP-A- 1 821 057
- JP-A- 9 042 587
- JP-U- 60 156 279

## Beschreibung

Die Erfindung bezieht sich auf einen Kompensator für die Durchführung eines heißen Prozessrohres durch eine Wand, bestehend aus einem Prozessrohr, das aus einem heißen Raum hinein in einen kalten Raum durch ein Kanalstück verläuft, das in einen Durchbruch in der Wand eingepasst ist, und einer Isolation auf der Wand und einem Isolationsinnenrohr, das das Prozessrohr umschließt und einem Isolationsaußenrohr, das auf der Innenseite des Kanalstückes aufliegt und einem Winkelflansch, der die wandferne Stirnseite des Isolationsaußenrohres mit dem Prozessrohr verbindet und einem etwa hohlzylindrischen, flexiblen Gewebekompensator, der mit der Außenfläche des Kanalstücks und dem Winkelflansch verbunden ist.

Die Durchführung eines heißen Prozessrohres durch eine Wand ist bei Kraftwerken, Müllverbrennungsanlagen und ähnlichen Einrichtungen eine häufig zu lösende Aufgabe, wenn z. B. Rohre für Wärmetauscher aus dem heißen Feuerungsraum durch dessen Wand hindurch herausgeführt werden sollen. Dabei dehnt sich das wärmeführende Prozessrohr durch das heiße, darin geführte Medium aus, sodass es seine Position gegenüber der Wanddurchführung verändert. Diese Bewegung wird durch einen sogenannten "Kompensator" kompensiert.

Auf aktuellem Stand der Technik stellt für diese Aufgabe die PS-DE 32 23 082 C2 einen Weichstoffkompensator vor, der die Fuge zwischen zwei sich gegeneinander bewegende Rohrstutzen durch einen mehrschichtigen Aufbau aus flexiblen Isolationsmaterialien mit darin enthaltenen Luftschichten, Strahlungsräumen und Schikanen abdeckt. Das weiche Isolationsmaterial kann durch die Abstände zwi schen den Schichten Strahlungswärme noch wirkungsvoller zurückhalten. Gleichzeitig durchströmt die Hohlräume Kühlluft, die das Isolationsmaterial vor allzu großer Erhitzung durch Konvektion schützt.

Der Nachteil dieser Konstruktion ist vor allem ihr recht komplizierter Aufbau und die trotz allen Kühlaufwandes gegenüber festen Isolationsmaterialien immer noch deutlich geringere Lebensdauer.

Als alternative Lösung sind Kompensatoren aus festen, unflexiblen Isolationsstoffen bekannt. Sie werden z. B. als zwei teleskopisch ineinander schiebbare Rohre beschrieben, die nach außen hin durch einen Gewebekompensator abgedeckt werden, der ähnlich wie ein Balg die nach außen hin sichtbare Fuge zwischen den beiden Rohren überspannt. Die beiden Rohre schirmen einen großen Anteil der Strahlungswärme von dem wärmeempfindlichen Gewebekompensator ab.

Nachteilig ist, dass bei maximal weit auseinander gefahrenen Rohrstutzen an den Fugen jeweils Strahlungswärme und zusätzlich Konvektionswärme auf den empfindlichen Gewebekompensator trifft: Zum einen strahlt Wärme aus dem frei gewordenen, schlanken Abschnitt des Innenrohres auf den Kompensator. Zum anderen strömt erhitzte Luft durch den Spalt zwischen Innen- und Außenrohr. Deshalb altert der Gewebekompensator im dem den Fugen naheliegenden Bereich besonders schnell. Dieser Bereich wird damit zu einer Art von Sollbruchstelle, durch die z. B. Rauchgas aus dem Innenraum in die Umgebung entweichen kann.

Auf aktuellem Stand der Technik beschreibt die JP 60 156 279 eine Isolationsvorrichtung für ein undichtes oder gebrochenes Prozessrohr, die aus einem Isolationsinnenrohr besteht, dass auf dem Prozessrohr aufliegt und einem Isolationsaussenrohr, das das Isolation sinnenrohr umschließt. Beide Isolationsrohre werden von einem flexiblen Gewebekompensator umschlossen, der auch bei Bewegungen der beiden Isolationsrohre gegeneinander das Prozessrohr abdichtet.

Der wesentliche Nachteil dieses Prinzips ist, dass laterale, also quer zur Längsachse wirkende Bewegungen von zwei Rohrenden gegen einander nicht überbrückt werden können. Nur Bewegungen in Längsrichtung der Rohre können kompensiert werden.

Auf diesem Hintergrund hat sich die Erfindung die Aufgabe gestellt, einen Kompensator zu entwickeln, der die thermische Belastung des Gewebekompensators sowohl durch Wärmestrahlung als auch durch Wärmekonvektion weitestgehend reduziert, wobei die Isolierung sowohl gasdicht als auch langzeitbeständig sein soll und Bewegungen des Prozessrohres gegenüber der Wanddurchführung sowohl in lateraler als auch in axialer Richtung kompensieren kann.

Als Lösung präsentiert die Erfindung, dass zwischen Isolationsinnenrohr und Isolationsaußenrohr ein laterales Spiel besteht und auf dem Prozessrohr ein Isolationszusatzrohr aufliegt, das vom Winkelflansch ausgeht und in dessen Nähe befestigt ist und sich bei der niedrigsten Temperatur bis zur wandfernen Stirnseite des Isolationsinnenrohres erstreckt und bei der höchsten Betriebstemperatur um einen Abstand davon entfernt ist, wobei sich der Abstand bei allen Betriebstemperaturen gegenüber vom Isolationsaußenrohr befindet.

Zu den Merkmalen der Erfindung zählt, dass zwischen dem inneren Isolationsrohr und dem Isolationsaußenrohr ein Spiel besteht, dass eine reibungsfreie Bewegung der beiden Rohre ineinander ermöglicht.

Schon in der einfachsten Ausführungsform besteht das innere Isolationsrohr praktisch aus zwei Teilen, nämlich dem (längeren) Isolationsinnenrohr, welches dem heißen Raum näher ist und durch die Wand hindurch führt und seinem Gegenstück, dem Isolatioriszusatzrohr, das ebenfalls auf dem Prozessrohr aufliegt, aber mit zunehmender Temperatur in einen immer größer werdenden Abstand zum Isolationsaussenrohr rückt. Ein wesentliches Merkmal der Erfindung ist, dass dieser Abstand zwischen den beiden inneren Isolationsrohren stets gegenüber vom Isolationsaußenrohr positioniert ist. Das hat den ganz entscheidenden Vorteil, dass Strahlungswärme, die durch diesen Abstand hindurch strahlt, auf das Isolationsaußenrohr trifft und von diesem zu einem Teil reflektiert wird und zum anderen Teil abgeführt wird, aber nicht auf den wärmeempfindlichen Gewebekompensator trifft. und von diesem zu einem Teil reflektiert wird und zum anderen Teil abgeführt wird, aber nicht auf den wärmeempfindlichen Gewebekompensator trifft.

Auch die Wärmeübertragung durch Konvektion ist gegenüber den bisher bekannten Lösungen deutlich reduziert, da der Luftraum zwischen dem Isolationsinnenrohr und dem Isolationsaußenrohr an der wandfernen Seite durch die feste Verbindung zwischen dem Isolationszusatzrohr und dem Winkelflansch und dem darauf aufliegenden Isolationsaußenrohr abgeschlossen ist und auf der wandnahen Seite nur durch das geringe Spiel zwischen dem Isolationsaußenrohr und dem Kanalstück zum Luftraum zwischen Isolationsaußenrohr und dem Gewebekompensator Verbindung hat.

Durch diesen schmalen Spalt zwischen Kanalstück und dem darin teleskopartig bewegten Isolationsaußenrohr gelangt nur eine sehr geringe Wärmemenge an den Gewebekompensator. Diese Wärmemenge ist in der Praxis in der Regel gerade ausreichend, um die Luft über den Taupunkt von aggressiven, sauren Bestandteilen des Rauchgases hinaus zu erwärmen. Dadurch bleiben die sauren Bestandteile weiterhin als Gas gelöst und kondensieren nicht als Flüssigkeit, die den Gewebekompensator angreift.

Mit der erfindungsgemäßen Struktur eines Kompensators werden die Vorteile eines dauerhaft flexiblen und gasdichten Gewebekompensators verbunden mit den Vorteilen von unflexiblen, aber langzeitbeständigen und gegen sehr hohe Temperaturen unempfindlichen Isolierstoffen aus festem Material, wie z. B. Schamotte oder anderer Keramik. Dabei ist ein ganz entscheidender Vorteil, dass bei thermisch bedingter Ausdehnung die dadurch zwangsläufig entstehende Fuge in die Mitte des Kompensators verlegt wird, sodass diese Fuge allseits von Hochtemperatur- und langzeit-beständigem Isolierstoff umgeben ist. Dadurch wird es möglich, an den Stirnseiten des Kompensators als Werkstoff für die mechanischen Halterungen der Isolierstoffelemente einfach zu beschaffendes und zu verarbeitendendes Material wie z. B. Stahl einzusetzen.

Eine Ausführungsvariante bietet die Möglichkeit zur Kompensation lateraler Bewegungen des Prozessrohrs, wobei die Bewegungsrichtung "lateral" etwa in der Ebene der vom Prozessrohr durchstoßenen Wand orientiert ist, was in den meisten Fällen einer radialen Richtung in Bezug auf das Prozessrohr im Bereich der Wanddurchführung entspricht.

Nur dann, wenn das Prozessrohr die Wand nicht etwa orthogonal durchläuft, sondern - was durchaus möglich ist - in einem spitzen Winkel, bewirkt eine - auf die Wand bezogen - laterale Bewegung sowohl eine axiale als auch eine radiale Bewegung.

Nach bisherigem Stand der Technik sind für feste, inflexible aber sehr dauerhafte und langzeitbeständige Isolationsmaterialien wie z.B. Schamotte nur Kompensatoren bekannt, die Bewegungen in axialer Richtung kompensieren können, wo zwei Rohre aus Schamotte oder einer anderen Keramik teleskopisch ineinander verschoben werden.

Die Erfindung gibt diesem Paar aus einem Innenrohr und einem Außenrohr zusätzlich zur Bewegbarkeit in axialer Richtung auch eine Möglichkeit, sich in radialer Richtung gegeneinander bewegen zu können, indem auf der Stirnseite des Kanalstücks innerhalb der Isolation eine Abschlussscheibe befestigt ist, die mit einer Isolationsscheibe verbunden ist. Beide Scheiben weisen eine große Öffnung auf, durch welche das Isolationsinnenrohr verläuft. Entscheidend dabei ist, dass das Isolationsinnenrohr in der Öffnung ein laterales, also hier radiales Spiel aufweist.

Mit der Dimensionierung dieses Spiels wird festgelegt, wie groß die radiale Bewegbarkeit sein soll. Dabei muss dieses laterale Spiel im ersten Ansatz ebenso groß sein wie das laterale Spiel zwischen dem Isolationsaußenrohr und dem Isolationsinnenrohr bzw. dem Isolationszusatzrohr. Falls innerhalb des Kompensators thermisch bedingt nicht nur eine Längung sondern auch noch eine zusätzliche Krümmung zu erwarten ist, muss das Spiel zwischen Isolationsaußenrohr und den beiden inneren Isolationsrohren noch um das Maß vergrößert werden, das durch die zu erwartende zusätzliche Krümmung entstehen kann.

Dadurch ist der Luftraum zwischen den beiden inneren Isolationsrohren und dem Isolationsaußenrohr spürbar vergrößert und dient als Ausgleich für radiale Bewegungen.

Damit der Spalt zwischen der Öffnung in der Abschlussscheibe und dem dadurch verlaufenden Isolationsinnenrohr geschlossen wird, liegt auf der Isolationsscheibe eine Isolationsinnenscheibe auf, die dagegen verschiebbar ist. Um den Luftraum vollständig abzuschließen umfasst diese Isolationsinnenscheibe das Isolationsinnenrohr voll umfänglich. Zur Befestigung schlägt die Erfindung Stifte vor, die parallel zur Fläche der Isolationsinnenscheibe vorwärts getrieben werden und dann in das Isolationsinnenrohr hineinragen.

Dadurch wird der Punkt des Prozessrohres, auf dem die Isolationsscheibe befestigt ist, zum Fixpunkt. Falls die axiale Position des Prozessrohres sich gegenüber der Isolationsscheibe verschieben sollte, so ist es erforderlich, dass das Isolationsinnenrohr auf dem Prozessrohr gleitend kann, damit kein Abstand zwischen der Isolationsscheibe und der darauf aufliegenden Isolationsinnenscheibe entsteht.

Da sich die beiden Isolationsscheiben innerhalb der Isolation auf der Wand befinden, muss die Isolationsinnenscheibe an ihren Stirnseiten einen Abstand zur umgebenen Isolation haben, der mindestens so groß ist wie das vorgesehene, laterale Spiel. Aber mit der vom Kanalstück fernen Fläche liegt die Isolationsinnenscheibe auf der Isolation der Wand auf.

Zur Verbindung der Isolationsscheibe mit der Abschlussscheibe schlägt die Erfindung Haltewinkel vor, die am Rande der Abschlussscheibe befestigt sind.

Auf diese Weise wird eine vergleichsweise einfache und mit weithin bekannten Werkzeugen herstellbare Stahlkonstruktion zum Grundträger des erfindungsgemäßen Kompensators.

In einer weiteren Ausführungsvariante bietet diese Stahlkonstruktion auch die Möglichkeit, den Kompensator gegen die Einflüsse von Wasser zu schützen, das durch gerissene Rohre - sogenannte Rohrreißer - hervorgerufen werden kann. Als Folge eines solchen Unfalls kann Wasser im heißen Raum freigesetzt werden, die Isolation auf der Wand des heißen Raums durchdringen und sich auf der untersten Fläche des heißen Raums ablagern, also auf der Wand, die den heißen vom kalten Raum trennt. Wenn dieses Wasser in den Kompensator eindringt, verursacht es dort Korrosionsschäden, die die stählernen Teile des Kompensators vorzeitig zerstören können und dadurch dessen Lebensdauer in unerfreulicher Weise verringern.

Mit verhältnismäßig geringem Mehraufwand kann die vorhandene Stahlkonstruktion des Kompensators im Bereich der Wand so ausgeführt werden, dass das Eindringen von größeren Wassermengen in den Kompensator verhindert wird. Dazu schlägt die Erfindung vor, dass die Abschlussscheibe, die in ihrer Hauptfunktion die Isolationsscheibe trägt, auch zusätzlich als Schutz gegen Wasser dient. Dazu muss sie wasserdicht mit dem Kanalstück verbunden werden, z. B. durch eine entsprechende Verschweißung. Wenn dann Wasser in die Isolation auf der Wand eingedrungen ist und von dieser wie von einem Schwamm aufgesaugt worden ist, so kann es nicht mehr durch einen Spalt zwischen der Abschlussscheibe und dem Kanalstück hindurch in den Kompensator eindringen.

Da das Wasser längere Zeit dort anstehen kann, ist es sinnvoll, die Abschlussscheibe aus rostfreiem oder zumindest rostarmen Stahl herzustellen.

Falls die unfallbedingte Wassermenge am tiefsten Punkt des heißen Raumes so groß ist, dass der Wasserspiegel über das Ende des Kanalstücks und die damit wasserdicht verschweißte Abschlussscheibe hinaus ansteigt, würde dennoch Wasser in den Kompensator eindringen.

Für diesen Fall schlägt die Erfindung vor, dass die Isolationsscheibe aus einem wasserundurchlässigen oder zumindest wasserhemmenden Material besteht. Da diese Isolationsscheibe prinzipbedingt ein Spiel gegenüber dem Isolationsinnerohr haben muss, bleibt stets eine Öffnung. Diese Öffnung ist durch die darauf aufliegende Isolationsinnenscheibe verschlossen. Bei hohem Wasserspiegel kann durch den Spalt zwischen der Isolationsscheibe und der Isolationsinnenscheibe Wasser hindurch in den Innenraum des Kompensators eindringen, was - wie erwähnt - dort höchst unwillkommene Korrosionsschäden erzeugt.

Um auch diesen Spalt gegen das Hindurchdringen von Wasser besser zu schützen, schlägt die Erfindung vor, dass zwischen Isolationsinnenscheibe und Isolationsscheibe eine zusätzliche Metallscheibe eingefügt wird. Sie ist ebenso groß wie die Isolationsinnenscheibe und gleitet bei radialen Bewegungen der Isolationsinnenscheibe auf der Isolationsscheibe.

Zusätzlich sollten die beiden Scheiben aus elastischem Material bestehen, sodass sie durch eine gewisse Federkraft aufeinandergedrückt werden. Dann ist der Spalt zwischen den beiden Spalten fast ganz verschlossen, sodass keine nennenswerten Wassermengen mehr in den Innenraum des Kompensators eindringen können.

Falls zu befürchten ist, dass Wasser zwischen dieser zusätzlichen Metallscheibe und dem Isolationsinnenrohr hindurch in den Innenraum des Kompensators eindringen sollte, präsentiert die Erfindung als weitere Verfeinerung, dass die Metallscheibe durch das Isolationsinnenrohr hindurch bis an das Prozessrohr heran verläuft und dort dicht mit ihm verbunden ist, z. B. durch eine Verschweißung.

Zusammen mit der wasserdichten Verschweißung der Abschlussscheibe mit dem Kanalstück ist dann das Ende des Kompensators in der Wand gut gegen das Eindringen von Wasser aus dem heißen Raum geschützt.

Bis hier her wurden die Einzelheiten dieser Stahlkonstruktion im Bereich des Wanddurchbruches geschildert. Auch für das andere, wandferne Ende lassen sich mit einfachen Winkeln und angeschweißten Flanschen die Isolationselemente gas- bzw. wärmedicht befestigen. Zum Beispiel schlägt die Erfindung zur Verbindung des Winkelflansches mit dem Prozessrohr ein Rohrstück als Haltestutzen vor, das das Prozessrohr umschließt und darauf aufliegt. Dieses Rohrstück ist mit einer Kante am Winkelflansch angeschweißt.

Als Option kann in den Winkelflansch eine Kühlluftzufuhr integriert werden. Je nach Prozesstemperatur und je nach Art des Werkstoffes vom Gewebekompensator kann damit eine für den Gewebekompensator optimale Betriebstemperatur erreicht werden.

Mit dem Begriff "Gewebekompensator" ist nicht nur ein Gewebe gemeint, das mit geeigneten Isolationsmaterialen beschichtet ist und dauerhaft flexibel und gasdicht ist, sondern auch jedes andere etwa folienartige Material, das zu einer Balgkonstruktion, also in etwa einem Hohlzylinder formbar ist, der sowohl auf dem Winkelflansch als auch auf dem Kanalstück aufliegt und dort durch ein Spannband mit einer Klemmung gehalten werden kann.

Die Isolationsrohre können natürlich aus einem einstückigen Rohr bestehen. Eine einfachere Herstellung, z. B. in einer Gussform, ist möglich, wenn die Isolationsrohre aus wenigstens zwei Halbschalen bestehen. Diese Halbschalen können dann ebenfalls durch ein Metallband mit einer Klemmung zusammengehalten werden.

Um für axiale Bewegungen auch im Bereich des Winkelflansches einerseits einen Ausgleich und andererseits eine thermisch optimale Konstruktion zu schaffen, schlägt die Erfindung vor, dass derjenige Bereich des Winkelflansches, auf dem der Gewebekompensator aufliegt, etwa parallel zur Oberfläche des Isolationsaußenrohres verläuft. Damit verläuft auch die Innenseite parallel zum Isolationsaußenrohr. Bei einer maximalen axialen Verschiebung kann sich dann der Winkelflansch an diesen Bereich der Außenseite des Isolationsaußenrohres anlegen.

Falls Kühlluftzuführungen vorgesehen sind, verbleibt dann immer noch ein ausreichend breiter Spalt, um einen Luftstrom zwischen Gewebekompensator und Isolationsaußenrohr einbringen zu können.

Der zuvor geschilderte Bereich der axialen Verschiebbarkeit erfordert, dass der Abstand des Auflagebereiches des Winkelflansches für den Gewebekompensator zum Isolationsaußenrohr mindestens dem lateralen Spiel entspricht, das zwischen Isolationsaußenrohr und den beiden inneren Isolationsrohren vorgesehen ist.

Im Folgenden sollen weitere Einzelheiten und Merkmale der Erfindung anhand eines Beispieles näher erläutert werden. Dieses soll die Erfindung jedoch nicht einschränken, sondern nur erläutern. Es zeigt in schematischer Darstellung:
- Figur 1: Längsschnitt durch einen kalten Kompensator
- Figur 2: Längsschnitt wie in Figur 1 in heißem Betriebszustand
- Figur 3: Explosionszeichnung der wichtigsten Bestandteile als Schrägbild

Die Figuren zeigen im Einzelnen:

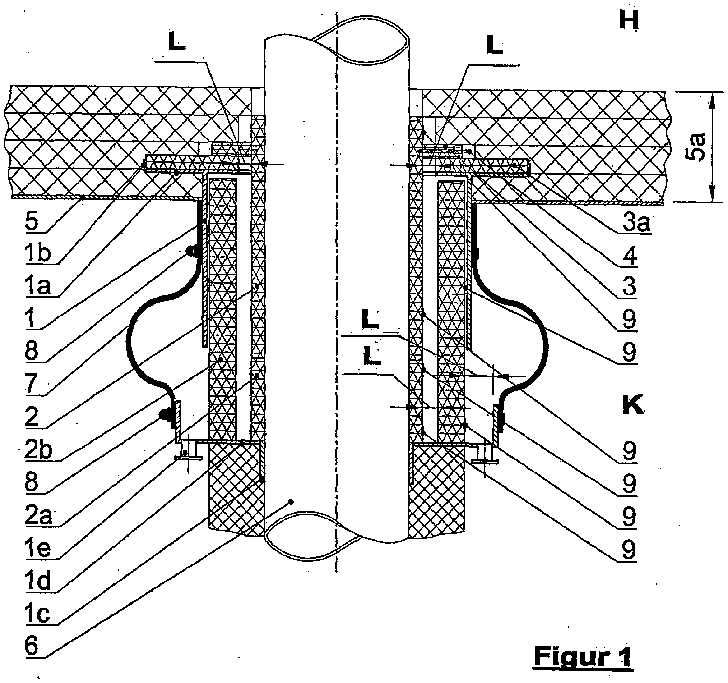

In **Figur 1** ist der Längsschnitt durch einen erfindungsgemäßen Kompensator in kaltem Betriebszustand gezeichnet. Der heiße Raum H am oberen Rand der Zeichnung ist durch die Isolation 5a auf der Wand 5 vom kalten Raum K getrennt. Auf diesen Temperaturunterschied nehmen auch die Begriffsteile "innen" und "außen" in den folgenden Bezeichnungen Bezug:
   "innen" ist nahe zum heißen Raum H oder zum heißen Prozessrohr 6; "außen" ist entfernt davon, also nahe zum kalten Raum K. Die Wand 5 und die Isolation 5a werden von einem Prozessrohr 6 durchbrochen. Auf dem Prozessrohr 6 liegt im oberen Bereich das Isolationsaußenrohr 2b auf, das im kalten Zustand direkt an das Isolationszusatzrohr 2a anschließt, welches am Winkelflansch 1d befestigt ist. Koaxial zum Isolationsinnenrohr 2 und zum Isolationszusatzrohr 2a ist das Isolationsaußenrohr 2b angeordnet. Es ist an seiner wandfernen Stirnseite mit dem Winkelflansch 1d verbunden und mit seiner Außenfläche innerhalb des Kanalstückes 1 beweglich. Die Fuge zwischen dem Kanalstück 1 und dem Winkelflansch 1d wird durch den Gewebekompensator 7 überbrückt, der auf den Winkelflansch 1 d ebenso wie auf das Kanalstück 1 b durch ein Metallband 9 angedrückt wird, das mit der Klemmung 8 zusammengehalten wird.

In Figur 1 ist erkennbar, wie sich zwischen dem Paar aus Isolationsinnenrohr 2 und Isolationszusatzrohr 2a und dem im Durchmesser größeren Isolationsaußenrohr 2b ein Luftraum ausbildet, der in radialer Richtung das Maß L aufweist, das Spiel zwischen den lateral gegeneinander verschiebbaren Komponenten.

In Figur 1 ist gut nachvollziehbar, wie sich dieser Luftraum nur durch den schmalen Spalt zwischen dem Isolationsaußenrohr 2b und der Innenfläche des Kanalstückes 1 mit dem Luftraum innerhalb des balgartig herausgewölbten Gewebekompensators 7 verbindet. Nur durch diesen schmalen Spalt kann erhitzte Luft aus dem inneren Luftraum in den äußeren Luftraum beim Gewebekompensator 7 fließen.

In Figur 1 ist zu erkennen, dass der innere Luftraum nach oben hin durch die Abschlussscheibe 1 a begrenzt ist, auf der die etwa gleich große Isolationsscheibe 3a aufliegt. Beide Scheiben sind von einer großen Öffnung durchbrochen, durch welche das Isolationsinnenrohr 2 und darunter das Prozessrohr 6 verläuft. Der Abstand zwischen der Innenkante von Abschlussscheibe 1a und Isolationsinnenrohr 2 entspricht dem Spiel L zwischen den lateral gegeneinander verschiebbaren Komponenten.

Zur Überdeckung dieses Spaltes liegt auf der Isolationsscheibe 3a die Isolationsinnenscheibe 3 auf. Sie ist mit den Stiften 4 am Isolationsinnenrohr 2 befestigt und hat seitlich gegenüber ihren Stirnkanten einen Bewegungsspielraum in der Isolation 5a. Ansonsten liegt sie jedoch flächig in einer entsprechenden Ausnehmung der Isolation 5a auf. In Figur 1 wird deutlich, wie sich die Isolationsinnenscheibe 3 auf der Isolationsscheibe verschieben kann, wobei der Spalt zwischen Isolationsinnenrohr 2 und der Isolationsscheibe 3a stets durch die Isolationsinnenscheibe 3 abgedeckt wird. Dadurch wird eine axiale Beweglichkeit ermöglicht, ohne den Luftraum zwischen Isolationsinnenrohr 2 und Isolationsaußenrohr 2b mit dem heißen Raum H zu verbinden.

In Figur 1 ist viermal das Spiel L zwischen den lateral gegeneinander verschiebbaren Komponenten eingezeichnet. Dabei werden die tatsächlich erforderlichen Abmessungen allesamt von der thermisch bedingten axialen Verschiebung des Prozessrohres 6 gegenüber der Wand 5 beeinflusst. Durch andere, thermisch bedingte Maßänderungen sowie durch zusätzliche Zwischenräume für die Option von Luftführungen können die in Figur 1 mit L bezeichneten Abmessungen jedoch in einem praktischen Konstruktionsbeispiel voneinander abweichen.

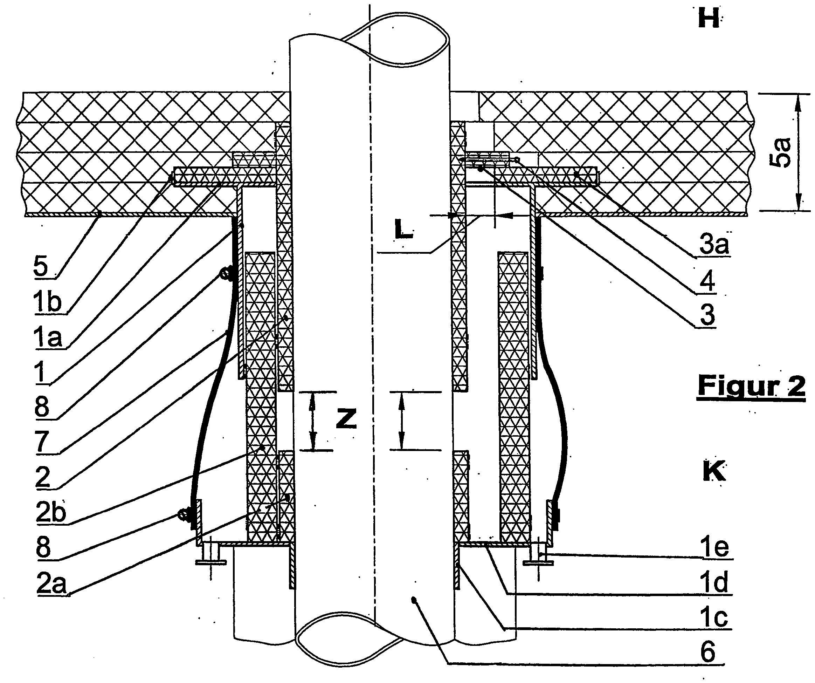

In **Figur 2** ist der erfindungsgemäße Kompensator in heißem Betriebszustand gezeichnet, bei dem sowohl in axialer wie auch in lateraler Richtung die maximale Verschiebung eingetreten ist. Der wiederum mit L bezeichnete Abstand zwischen der Isolationsscheibe 3a und der Außenfläche des Isolationsinnenrohres 2 ist auf der rechten Seite bis auf seinen maximalen Wert angewachsen, da sich auf der linken Seite das Isolationsinnenrohr 2 an die Kante der Abschlussscheibe 1a und der Isolationsscheibe 3a angelegt hat. Im Zentrum von Figur 2 ist zu erkennen, dass sich durch diese axiale bzw. laterale Verschiebung das Isolationsinnenrohr 2 an der linken Seite an das Isolationsaußenrohr 2b angelegt hat, ebenso das profilgleiche Isolationszusatzrohr 2a.

Durch die sehr starke Erhöhung der Temperatur hat sich das Prozessrohr 6 auch in Längsrichtung stark ausgedehnt, sodass sich ein Abstand Z zwischen dem Isolationsinnenrohr 2 und dem Isolationszusatzrohr 2a eingestellt hat.

In Figur 2 ist sehr gut nachvollziehbar, wie Wärmestrahlung, die durch den Abstand Z hinaus dringt, auf das Isolationsaußenrohr 2b trifft, nicht aber auf den (wärmeempfindlichen) Gewebekompensator 7. Vielmehr stellt sich das Isolationsaußenrohr 2b schützend in den Weg der Wärmestrahlung durch den Abstand Z hindurch auf den Gewebekompensator 7. Dadurch wird der Gewebekompensator 7 von der Wärmestrahlung fern gehalten.

In Figur 2 ist erkennbar, dass auch im sehr heißen Zustand nur ein sehr kleiner Spalt zwischen dem Isolationsaußenrohr 2b und dem Kanalstück 1 besteht, dass also nur eine geringe Menge an Luft und/oder Rauchgas aus dem erhitzten Raum nahe dem Prozessrohr an die Innenseite des Gewebekompensators 7 herantreten kann. Dadurch wird die Lufttemperatur in unmittelbarer Nachbarschaft des Gewebekompensators 7 stark reduziert, was mit einer deutlich gestiegenen Lebenserwartung des Gewebekompensators 7 gedankt wird.

Wenn eine weitere Temperaturreduzierung erforderlich ist, empfiehlt die Erfindung über die Kühlluftzufuhr 1e kühle Luft in den Luftraum zwischen dem Winkelflansch 1d, dem Gewebekompensator 7 und der Außenseite des Isolationsaußenrohres 2b einzublasen.

In Figur 2 wird im Querschnitt sichtbar, dass das Isolationsaußenrohr 2b mit seinem wandnahen Ende teleskopisch im Kanalstück 1 geführt ist. Mit seiner gegenüberliegenden Stirnseite liegt es auf dem Winkelflansch 1d auf und gleitet bei axialer Bewegung auf der Fläche dieses Winkelflansches 1d. Das Isolationszusatzrohr 2a ist im Bereich des Winkelflansches 1 d fest mit dem Prozessrohr 6 verbunden, sodass es sich bei thermisch bedingter Längenänderung des Prozessrohres mitsamt dem benachbarten Winkelflansch 1d von der Wand 5 entfernt. Dem Isolationszusatzrohr 2a ist auf dem Prozessrohr benachbart das Isolationsinnenrohr 2 mit gleichem Profil. Dieses ist im Bereich der Wand 5 über die Isolationsinnenscheibe 3, die mit den Stiften 4 verbunden ist, im Bereich der Isolation 5a fixiert. Dadurch verschiebt sich das Isolationsinnenrohr 2 nicht gegenüber der Isolation 5a auf der Wand 5, auch wenn sich das Prozessrohr 6 in axialer Richtung verschiebt.

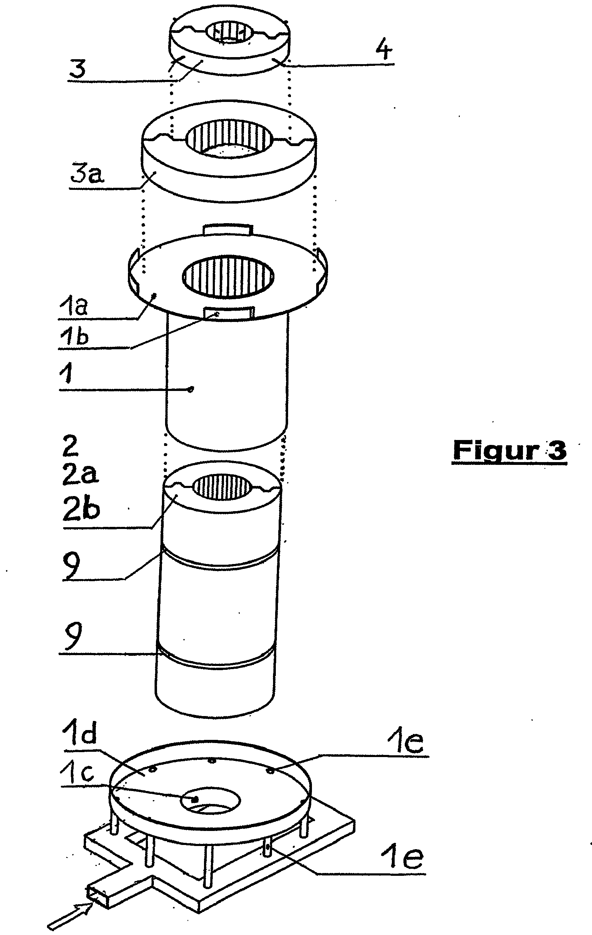

In **Figur 3** sind einige wesentliche Komponenten des erfindungsgemäßen Kompensators perspektivisch dargestellt und nach Art einer Explosionszeichnung in korrekter Reihenfolge wiedergegeben. An der Unterkante ist der Winkelflasch 1d gezeichnet, auf dessen großer, hier horizontal dargestellten, ringförmigen Fläche die Stirnseite des darüber symbolisch dargestellten Isolationsaußenrohres 2b bei radialer Verschiebung hin- und hergleiten kann.

In dieser Fläche sind mehrere Öffnungen der Kühlluftzufuhr 1e zu erkennen. Diese Kühlluftzuführungen 1e können z. B. über Rohre mit einem gemeinsamen Kühlluftkanal verbunden werden. In Figur 3 ist links unten ein Pfeil dargestellt, der den Kühlluftstrom symbolisiert.

Im Zentrum des Winkelflansches 1d ist der Haltestutzen 1c eingeschweißt, der das - hier nicht dargestellte - Prozessrohr 6 umschließt. Oberhalb des Winkelflansches 1d ist symbolisch für die drei Teile: Isolationsinnenrohr 2, Isolationszusatzrohr 2a und Isolationsaußenrohr 2b nur ein einziger Rohrabschnitt dargestellt. Gezeigt ist, wie dieser Rohrabschnitt aus zwei Halbschalen zusammengesetzt ist, die mit zwei Metallbändern 9 zusammengehalten werden.

In Figur 3 ist also nicht dargestellt, wie das Isolationsaußenrohr 2b mit seinem größeren Innendurchmesser das schlanke Isolationsinnenrohr 2 sowie das Isolationszusatzrohr 2a mit gleichen Durchmessern umschließt.

Als nächstes Element ist das zylindrische Kanalstück 1 dargestellt, das an seinem oberen Ende die Abschlussscheibe 1a trägt. Am Rande der Abschlussscheibe 1a sind in diesem Ausführungsbeispiel vier Haltewinkel 1b angesetzt. Diese Haltewinkel fixieren die auf der Abschlussscheibe 1a aufliegende Islolationsscheibe 3a. Darauf liegt wiederum die Isolationsinnenscheibe 3 auf. In Figur 3 ist erkennbar, wie durch die Isolationsinnenscheibe 3 vier Stück Stifte 4 getrieben sind. Sie ragen in die innere Öffnung der Isolationsinnenscheibe 3 hinein und treffen dort auf das Isolationsinnenrohr 2, um es zu fixieren.

### Bezugszeichenliste

- 1: Kanalstück, verläuft durch einen Durchbruch in der Wand 5
- 1a: Abschlussscheibe, auf der Stirnseite des Kanalstücks 1 innerhalb der Isolation 5a befestigt
- 1b: Haltewinkel, an der Kante der Abschlussscheibe 1a
- 1c: Haltestutzen, am Winkelflansch 1d, umschließt das Prozessrohr 6
- 1d: Winkelflansch, verbindet die wandferne Stirnseite des Isolationsaußenrohres 2b mit dem Prozessrohr 6
- 1e: Kühlluftzufuhr, in Winkelflansch 1d
- 2: Isolationsinnenrohr, umschließt das Prozessrohr 6
- 2a: Isolationszusatzrohr, umschließt das Prozessrohr 6 und schließt sichan den Winkelflansch 1d an
- 2b: Isolationsaußenrohr, liegt auf der Innenseite des Kanalstückes auf
- 3: Isolationsinnenscheibe, liegt auf der Isolationsscheibe 3a auf
- 3a: Isolationsscheibe, zwischen Isolationsinnenscheibe 3 und Abschlussscheibe 1a
- 4: Stift, verbindet Isolationsinnenscheibe 3 mit Isolationsinnenrohr 2
- 5: Wand, zwischen dem heißen Raum H und dem kalten Raum K
- 5a: Isolation auf der Wand 5
- 6: Prozessrohr, führt aus dem heißen Raum H hinein in den kalten Raum K
- 7: Gewebekompensator, verläuft von der Außenfläche des Kanalstücks 1 zum Winkelflansch 1d
- 8: Klemmung des Metallbandes 9
- 9: Metallband, zur Fixierung des Gewebekompensators 7 und/oder der Halbschalen der Isolationsrohre 2 bis 2b
- L: Spiel zwischen den lateral gegeneinander verschiebbaren Komponenten
- H: heißer Raum
- K: kalter Raum
- Z: Abstand zwischen Isolationsinnenrohr 2 und Isolationszusatzrohr 2a

## Patentansprüche

1. Kompensator für die Durchführung eines heißen Prozessrohres (6) durch eine Wand (5), bestehend aus
- einem Prozessrohr (6), das aus einem heißen Raum (H) hinein in einen kalten Raum (K) durch
- ein Kanalstück 1 verläuft, das in einen Durchbruch in der Wand (5) eingepasst ist, und
- einer Isolation (5a) auf der Wand (5) rund
- einem Isolationsinnenrohr (2), das das Prozessrohr (6) umschließt und
- einem Isolationsaußenrohr (2b), das auf der Innenseite des Kanalstückes (1) aufliegt und
- einem Winkelflansch (1d), der die wandferne Stirnseite des Isolationsaußenrohres (2b) mit dem Prozessrohr (6) verbindet und
- einem etwa hohlzylindrischen, flexiblen Gewebekompensator (7), der mit der Außenfläche des Kanalstücks (1) und dem Winkelflansch (1d) verbunden ist
**dadurch gekennzeichnet, dass**
- zwischen Isolationsinnenrohr (2) und Isolationsaußenrohr (2b) ein laterales Spiel (L) besteht und
- auf dem Prozessrohr (6) ein Isolationszusatzrohr (2a) aufliegt,
- das vom Winkelflartsch (1d) ausgeht und
- in dessen Nähe befestigt ist und
- sich bei der niedrigsten Temperatur bis zur wandfernen Stirnseite des Isolationsinnenrohres (2) erstreckt und
- bei der höchsten Betriebstemperatur um einen Abstand (Z)
davon entfernt ist,
wobei sich der Abstand (Z) bei allen Betriebstemperaturen gegenüber vom Isolationsaußenrohr (2b) befindet.

2. Kompensator nach Anspruch 1, **dadurch gekennzeichnet, dass** auf der Stirnseite des Kanalstücks (1) innerhalb der Isolation (5a) eine Abschlussscheibe (1a) befestigt ist, die mit einer Isolationsscheibe (3a) verbunden ist und
- das Isolationsinnenrohr (2) durch eine Öffnung in der Abschlussscheibe (1a) verläuft, innerhalb derer es zumindest das laterale Spiel (L) hat und
- auf der Isolationsscheibe (3a) eine Isolationsinnenscheibe (3) aufliegt und dagegen verschiebbar ist, die das Isolationsinnenrohr (2) vollumfänglich umfasst.

3. Kompensator nach Anspruch 2, **dadurch gekennzeichnet, dass** die Abschlussscheibe (1a) wasserdicht mit dem Kanalstück (1) verbunden ist, z. B. durch eine Verschweißung.

4. Kompensator nach Anspruch 2, **dadurch gekennzeichnet, dass** die Abschlussscheibe (1a) aus rostfreiem oder zumindest rostarmen Stahl besteht.

5. Kompensator nach einem der vorhergehenden Ansprüche 2 bis 4, **dadurch gekennzeichnet, dass** die Isolationsinnenscheibe (3) mittels Stiften (4) auf dem Isolationsinnenrohr (2) fixiert ist.

6. Kompensator nach Anspruch 5, **dadurch gekennzeichnet, dass** die Isolationsinnenscheibe (3) mit ihrer dem Kompensator zugewandten Seite auf einer Metallscheibe von gleicher Größe aufliegt und die Isolationsscheibe (3a) aus wasserundurchlässigem oder zumindest wasserhemmendem Material besteht.

7. Kompensator nach Anspruch 6, **dadurch gekennzeichnet, dass** die Metallscheibe an den Stiften (4) befestigt ist.

8. Kompensator nach Anspruch 6, **dadurch gekennzeichnet, dass** die Metallscheibe durch das Isolationsinnenrohr (2) hindurch bis an das Prozessrohr (6) heran verläuft und mit diesem wasserdicht verbunden ist, z. B. durch eine Verschweißung.

9. Kompensator nach einem der vorhergehenden Ansprüche 2 bis 8, **dadurch gekennzeichnet, dass** die Isolationsinnenscheibe (3) an ihren Stirnseiten zumindest den Abstand (L) zur umgebenden Isolation (5a) hat, aber mit der vom Kanalstück (1) fernen Fläche auf der Isolation (5a) aufliegt.

10. Kompensator nach einem der vorhergehenden Ansprüche 2 bis 9, **dadurch gekennzeichnet, dass** Haltewinkel (1b) am Rande der Abschlussscheibe (1a) die Isolationsscheibe (3a) fixieren.

11. Kompensator nach einem der vorhergehenden Ansprüche, **dadurch gekennzeichnet, dass** mit dem Winkelflansch (1d) ein Rohrstück als Haltestutzen (1c) werbunden ist, der das Prozessrohr (6) umschließt und darauf aufliegt.

12. Kompensator nach einem der vorhergehenden Ansprüche, **dadurch gekennzeichnet, dass** durch den Winkelflansch (1d) wenigstens eine Kühlluftzufuhr (1e) hindurchführt.

13. Kompensator nach einem der vorhergehenden Ansprüche, **dadurch gekennzeichnet, dass** der Gewebekompensator (7) durch je ein Metallband (9) auf den Winkelflansch (1d) und auf das Kanalstück (1) aufgedrückt wird, wobei jedes Metallband (9) durch eine Klemmung (8) um das Kanalstück (1) und um den Winkelflansch (1d) gespannt wird.

14. Kompensator nach einem der vorhergehenden Ansprüche, **dadurch gekennzeichnet, dass** zumindest eines der Isolationsrohre (2) bis (2b) aus wenigstens zwei Halbschalen besteht.

15. Kompensator nach einem der vorhergehenden Ansprüche, **dadurch gekennzeichnet, dass** die Halbschalen der Isolationsrohre (2) bis (2b) durch wenigstens ein Metallband (9) mit einer Klemmung (8) zusammengehalten werden.

16. Kompensator nach einem der vorhergehenden Ansprüche, **dadurch gekennzeichnet, dass** der Bereich des Winkelflansches (1d), auf dem der Gewebekompensator (7) aufliegt, etwa parallel zur
Oberfläche des Isolationsaußenrohres (2b) werläuft.

17. Kompensator nach Anspruch 16, **dadurch gekennzeichnet, dass** der Abstand des Auflagebereiches des Winkelflansches (1d) für den Gewebekompensator (7) zum Isolationsaußenrohr (2b) mindestens dem lateralen Spiel (L) entspricht oder etwas größer ist.

18. Kompensator nach Anspruch 2 und gegebenenfalls inem der vorhergehenden Ansprüche 3 bis 17, **dadurch gekennzeichnet, dass** die Isolationsrohre (2) bis (2b) und die Isolationsscheiben (3) und (3a) aus
- Schamotte und/oder
- einer anderen Keramik und/oder
- Keramikwolle bestehen.

19. Kompensator nach einem der vorhergehenden Ansprüche, **dadurch gekennzeichnet, dass** das Kanalstück (1) und die Abschlussscheibe (1a) und der Haltewinkel (1b) und der Haltestutzen (1c) und der Winkelflansch (1d) und die Kühlluftzufuhr (1e) aus Stahl oder einem anderen Metall bestehen.

## Claims

1. Compensation element for feeding a hot process pipe (6) through a wall (5), comprising
- a process pipe (6), which runs from a hot chamber (H) into a cold chamber (K), through
- a duct section (1), which is fitted into a penetration in the wall (5), and
- an insulation (5a) on the wall (5), and
- an inner insulation pipe (2), which surrounds the process pipe (6), and
- an outer insulation pipe (2b), which bears against the interior of the duct section (1),
- an angular flange (1d), which connects that end face of the outer insulation pipe (2b) furthest from the wall to the process pipe (6)
- an approximately hollow cylindrical, flexible fabric compensation element (7), which is connected to the outer surface of the duct section (1) and the angular flange (1 d) **characterised in that**
- lateral play (L) exists between the inner insulation pipe (2) and the outer insulation pipe (2b)
- an additional insulation pipe (2a) bears against the process pipe (6) and,
- leads from the angular flange (1d), and
- is fixed in the vicinity thereof, and
- at the lowest temperature, extends as far as that end face of the inner insulation pipe (2) that is furthest from the wall, and
- at the highest operating temperature forms a clearance (Z) therefrom,
the clearance (Z) being located opposite the outer insulation pipe (2b) at all operating temperatures.

2. Compensation element according to claim (1), **characterised in that**, on that end face of the duct section (1) within the insulation (5a), a closure disc (1a) is fixed, which is connected to an insulation disc (3a), and
- the inner insulation pipe (2) runs through an opening in the closure disc (1a), within which it has at least the lateral play (L), and
- against the insulation disc (3a), an inner insulation disc (3) bears and is displaceable with respect thereto, which encloses the inner insulation pipe (2) around its full circumference.

3. Compensation element according to claim (2), **characterised in that** the closure disc (1a) is connected in a watertight manner to the duct section (1), for example by welding.

4. Compensation element according to claim (2), **characterised in that**, the closure disc (1a) is made of stainless or at least rust-resistant steel.

5. Compensation element according to one of the preceding claims, **characterised in that** the inner insulation disc (3) is fixed on the inner insulation pipe (2) by means of pins (4).

6. Compensation element according to claim (5), **characterised in that** the inner insulation disc (3) bears, with its side that faces the compensation element, against a metal disc of the same size and the insulation disc (3a) consists of water-impermeable or at least water-resistant material.

7. Compensation element according to claim (6), **characterised in that** the metal disc is fixed on the pins (4).

8. Compensation element according to claim (6), **characterised in that** the metal disc runs through the inner insulation pipe (2) as far as the process pipe (6), and is connected to the latter in a watertight manner, for example by welding.

9. Compensation element according to one of the preceding claims, **characterised in that** the inner insulation disc (3) has, at its end faces, at least the clearance (L) from the surrounding insulation (5a), but, with the surface that is furthest from the duct section (1), bears against the insulation (5a).

10. Compensation element according to one of the preceding claims, **characterised in that** retaining angles (1 b) at the edge of the closure disc (1a) fix the insulation disc (3a).

11. Compensation element according to one of the preceding claims, **characterised in that** a pipe section is connected to the angular flange (1d) as retaining connector (1c), surrounds the process pipe (6) and bears against it.

12. Compensation element according to one of the preceding claims, **characterised in that** at least one cooling air feed (1e) passes through the angular flange (1d).

13. Compensation element according to one of the preceding claims, **characterised in that** the fabric compensation element (7) is pressed by a metal strap (9) in each case onto the angular flange (1d) and onto the duct section (1), each metal strap (9) being tensioned by means of a clamp (8) around the duct section (1) and around the angular flange (1d).

14. Compensation element according to one of the preceding claims, **characterised in that** at least one of the insulation pipes (2) to (2b) consists of at least two half-shells.

15. Compensation element according to one of the preceding claims, **characterised in that** the half-shells of the insulation pipes (2) to (2b) are held together by at least one metal strap (9) with a clamp (8).

16. Compensation element according to one of the preceding claims, **characterised in that** the region of the angular flange (1d) against which the fabric compensator (7) bears, runs approximately parallel to the surface of the outer insulation pipe (2b).

17. Compensation element according to claim (16), **characterised in that** the clearance of the contact region of the angular flange (1d) for the fabric compensation element (7) from the outer insulation pipe (2b) corresponds at least to the lateral play (L), or is somewhat larger.

18. Compensation element according to Claim 2 and, if appropriate, one of the claims 3 to 17, **characterised in that** the insulation pipes (2) to (2b) and the insulation discs (3) and (3a) consist of
- fireclay and/or
- another ceramic and/or
- ceramic wool

19. Compensation element according to one of the preceding claims, **characterised in that** the duct section (1) and the closure disc (1 a) and the retaining angle (1b) and the retaining connector (1c) and the angular flange (1d) and the cooling air feed (1e) consist of steel or another metal.

## Revendications

1. Compensateur pour le passage d'un tuyau de process (6 à travers un mur (5), consistant en
• un tuyau de process (6), qui passe d'un espace chaud (H) à un espace froid (K) à travers
• une pièce de canal 1 qui est placée dans un passage dans le mur (5) et
• une isolation (5a) sur le mur (5) et
• un tuyau intérieur d'isolation (2) qui enveloppe le tuyau de process (6) et
• un tuyau extérieur d'isolation (2b) qui repose sur la face intérieure de la pièce de canal (1) et
• une bride d'angle (1d)
**caractérisé par le fait**
• **qu'**il y a un jeu latéral (L) entre le tuyau extérieur d'isolation (2b).
• un tuyau supplémentaire d'isolation (2a) reposant sur le tuyau de process (6),
• qui part de la bride d'angle (1d) et
• qui est fixé à proximité de ce dernier et
• qui s'allonge, lorsque la température est la plus basse, jusqu'à la face frontale, loin du mur, du tuyau intérieur d'isolation (2) et
• s'en écarte d'une distance (Z) lorsque la température de service
est la plus élevée.
sachant que cette distance (Z), à toutes les températures de service, est conservée vis-à-vis du tuyau extérieur d'isolation (2b).

2. Compensateur selon la revendication 1, **caractérisé par le fait qu'**une rondelle terminale (1a) qui est reliée à une rondelle d'isolation (3a) est fixée, sur la face frontale de la pièce de canal (1), à l'intérieur de l'isolation (5a),
• le tuyau intérieur d'isolation (2) passant à travers une ouverture dans la rondelle terminale (1a), à l'intérieur de laquelle il a au moins le jeu latéral (L),
• une rondelle intérieure d'isolation (3) qui enveloppe entièrement le tuyau intérieur d'isolation reposant sur la rondelle d'isolation (3a) en pouvant être poussée contre elle.

3. Compensateur selon la revendication 2, **caractérisé par le fait que** la rondelle terminale (1a) est reliée de façon étanche à l'eau avec la pièce de canal (1), par exemple au moyen d'une soudure.

4. Compensateur selon la revendication 2, **caractérisé par le fait que** la rondelle terminale (1a) est constituée d'acier inoxydable ou au moins faiblement oxydable.

5. Compensateur selon une des revendications précédentes 2 à 4, **caractérisé par le fait que** la rondelle intérieure d'isolation (3) est fixée sur le tuyau intérieur d'isolation (2) au moyen de goupilles (4).

6. Compensateur selon la revendication 5, **caractérisé par le fait que** la rondelle intérieure d'isolation (3) repose, avec sa face tournée vers le compensateur, sur une rondelle métallique de même taille, la rondelle d'isolation (3a) consistant en un matériau étanche à l'eau ou tout au moins repoussant l'eau.

7. Compensateur selon la revendication 6, **caractérisé par le fait que** la rondelle métallique est fixée sur les goupilles (4).

8. Compensateur selon la revendication 6, **caractérisé par le fait que** la rondelle métallique passe à travers le tuyau intérieur d'isolation (2) jusqu'au tuyau de process (6) en étant reliée à ce dernier de façon étanche à l'eau, par exemple au moyen d'une soudure.

9. Compensateur selon une des revendications précédentes 2 à 8, **caractérisé par le fait que** la rondelle intérieure d'isolation (3), sur ses faces frontales, au moins à une distance (L) par rapport à l'isolation environnante (5a), mais repose avec la surface éloignée de la pièce de canal (1) sur l'isolation (5a).

10. Compensateur selon une des revendications précédentes 2 à 9, **caractérisé par le fait que** des équerres de retenue (1 b) fixent la rondelle d'isolation (3a) au bord de la rondelle terminale (1a).

11. Compensateur selon une des revendications précédentes, **caractérisé par le fait qu'**une pièce de tuyau est reliée à la bride d'angle (1d) en tant que manchon support (1c) qui enveloppe le tuyau de process (6) en reposant sur lui.

12. Compensateur selon une des revendications précédentes, **caractérisé par le fait qu'**au moins une alimentation en air frais (1e) passe à travers la bride d'angle (1d).

13. Compensateur selon une des revendications précédentes, **caractérisé par le fait que** le compensateur de tissu (7) est imprimé à travers une bande métallique (9) sur la bride d'angle (1d) et la pièce de canal (1), sachant que chaque bande métallique (9) est serrée par un collier (8) autour de la pièce de canal (1) et autour de la bride d'angle (1d).

14. Compensateur selon une des revendications précédentes, **caractérisé par le fait qu'**au moins un des tuyaux d'isolation (2) à (2b) consiste en au moins deux demi-coquilles.

15. Compensateur selon une des revendications précédentes, **caractérisé par le fait que** les demi-coquilles des tuyaux d'isolation (2) à (2b) sont maintenues ensemble par au moins une bande métallique (9) munie d'un collier (8).

16. Compensateur selon une des revendications précédentes, **caractérisé par le fait que** la distance de la zone de support de la bride d'angle (1d) repose sur le compensateur de tissu (7), en suivant un parcours à peu près parallèle à la surface du tuyau extérieur d'isolation (2b).

17. Compensateur selon la revendication précédente 16, **caractérisé par le fait que** la distance de la zone de support de la bride d'angle (1d), vis-à-vis du tuyau intérieur d'isolation (2b), pour le compensateur de tissu (7), correspond au moins au jeu latéral (L) ou est un peu plus grand.

18. Compensateur selon la revendication 2 et le cas échéant une des revendications précédentes 3 à 17, **caractérisé par le fait que** les tuyaux d'isolation (2) à (2b) et les rondelles d'isolation (3) et (3a) sont constitués
• d'argile réfractaire et/ou
• d'une céramique et/ou
• de laine de céramique.

19. Compensateur selon une des revendications précédentes, **caractérisé par le fait que** la pièce de canal (1), la rondelle terminale (1a), l'équerre de retenue (1b), le manchon support (1c), la bride d'angle (1d) et l'alimentation en air de refroidissement (1e) sont faits en acier ou dans un autre matériau.
